(19) Europäisches Patentamt
European Patent Office
Office européen des brevets

(11) **EP 3 983 591 B1**

(12) **EUROPEAN PATENT SPECIFICATION**

(45) Date of publication and mention
of the grant of the patent:
**05.08.2026 Bulletin 2026/32**

(21) Application number: **20734821.0**

(22) Date of filing: **12.06.2020**

(51) International Patent Classification (IPC):
**D04H 1/4218** (2012.01)     **D04H 1/587** (2012.01)
**D04H 1/64** (2012.01)      **D04H 1/732** (2012.01)
**E04B 7/00** (2006.01)

(52) Cooperative Patent Classification (CPC):
**D04H 1/587; D04H 1/4218; D04H 1/64;
D04H 1/732; E04D 12/002; E04D 13/12;
E04D 13/16**

(86) International application number:
**PCT/US2020/037346**

(87) International publication number:
**WO 2020/252220 (17.12.2020 Gazette 2020/51)**

(54) **WALKABLE FACER MATS FOR ROOF INSULATION**

BEGEHBARE DECKMATTEN FÜR DIE DACHDÄMMUNG

TAPIS DE REVÊTEMENT PRATICABLES POUR ISOLATION DE TOIT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **13.06.2019 EP 19180110**

(43) Date of publication of application:
**20.04.2022 Bulletin 2022/16**

(73) Proprietor: **Owens Corning Intellectual Capital,
LLC
Toledo, OH 43659 (US)**

(72) Inventors:
• **TJADEN, Hendrik J.**
**7424AA Deventer (NL)**
• **VERSCHUT, Cornelis**
**6601DZ Wijchen (NL)**

(74) Representative: **Novagraaf Group
Chemin de l'Echo 3
1213 Onex / Geneva (CH)**

(56) References cited:
EP-A1- 2 230 075      WO-A1-2019/032393
US-A- 5 112 678      US-A1- 2003 032 351
US-A1- 2007 193 683    US-A1- 2010 143 684

**Description**

*Field of the Invention*

The present invention relates to non-woven veils or mats, comprising a non-woven veil of glass fibres, for use as facers on insulation products, in particular on mineral wool insulation products used in roofing applications.

*Background*

Roof construction, in particular the construction of flat roofs, typically involves the use of insulation material such as boards or mats of mineral wool based insulation material.

Some forms of insulation, for example mineral wool insulation, are inherently easily compressible and deformable. This is problematic during construction since it may be necessary for workmen to stand or walk on top of the insulation layer, for example during application of further layer(s) such as a roofing membrane.

It is desirable to use insulation based on a single layer, e.g. a single layer of mineral wool, which advantageously takes up less space (thickness) on the roof and is less expensive than multiple layers. However, such a product must also meet structural integrity demands.

A facer is therefore required to impart improved structural properties without increasing thickness, weight, or cost of the insulation boards. The facer needs to prevent damage to the boards and, importantly, to allow workmen to walk over the insulation material prior to and during application of the roofing membrane. An additional requirement for such a facer is that it can resist the fire used during torching of a bitumen-based roofing membrane.

A non-woven mat for use as such a facer also needs to withstand the processing and handling required for its eventual commercial utilisation. In particular, the facer mat can ideally be stored in a roll which is easily transportable and can be unwound when needed for application to the insulation product.

US 2003/0032351 A1 describes a low fibre, plyable facer suitable for use in the construction industry, particularly for insulation board manufacture, comprising a dry preformed fibre mat containing a binder for the fibres, preferably a preformed glass mat, coated with a prefoamed composition which contains a polymer latex, a foam sustaining amount of a surfactant and a flame retarding and/or strengthening amount of a mineral filler and also to the use and process for the preparation of the above as well as to a siding underlayment or insulation board having a foamed, thermosetting resin core which is surfaced with said facer as a product for commercial use.

The present invention has been devised in light of the above considerations.

*Summary of the Invention*

The present invention therefore provides a non-woven mat, suitable for use as a walkable facer for roofing insulation. The facer allows walkability, reduced compressibility, and structural support of an otherwise easily compressible and deformable insulation layer, board or material.

The non-woven mat comprises a non-woven veil of fibres impregnated with an impregnation composition. The impregnation composition comprises at least one inorganic filler and at least one organic binder. The non-woven mat comprises a non-woven veil of glass fibres.

The term 'veil', as is known in the art, refers generally to a non-woven web of fibres, loosely held together. This may also be referred to as a 'fleece' or non-woven fleece. The web of fibres is preferably bound together by a binder composition (pre-binder). Unless context dictates otherwise, the term 'veil' as used herein generally refers to a bound non-woven web of fibres *prior* to impregnation with a binder/filler (i.e. to an unfilled / non-impregnated veil).

After impregnation with the impregnation composition the resultant impregnated veil, which provides the non-woven mat of the invention, is suitable for use as a facer for insulation materials. The terms 'mat', 'non-woven mat' and 'facer' may be used interchangeably herein to refer to the impregnated veil product.

A non-woven veil useful in the facers of the invention comprises glass fibres and (optionally) a pre-binder. Non-woven veils of glass fibres are known in the art and can be produced by known methods, as described further below.

The non-woven veil used in the present invention has an area weight of at least 45 g/m$^2$ (not including the impregnation composition). The inventors have found that this results in improved mechanical properties. When used in the production of a facer for mineral wool insulation materials, these increased mechanical properties allow for a reduction of the mineral wool board density. As a result, less material is required which results in higher insulation performance.

The filler in the impregnation composition comprises calcium carbonate ($CaCO_3$) and a second inorganic particulate solid selected from aluminium trihydrate (ATH) and magnesium dihydroxide ($Mg(OH)_2$). The calcium carbonate and the second inorganic particulate solid are present in a ratio of from about 1,7:1 to about 2.5:1. In some embodiments, the ratio is about 2:1.

In some embodiments, this ratio may provide improved 'peel strength' of the final product (which is indicative of wind uplift performance). It may also allow for good resistance of the facer towards torching (done when applying bitumen membrane to roof).

As further discussed below, the non-woven mats (facers) provided by the present invention have a bursting strength of at least 53.38 N (12 lbf) according to ASTM D3787. The present inventors have found that this correlates with an acceptable point load performance of the final product (i.e. an insulation board with the facer applied), and hence predicts/mimics 'walkability'.

The invention includes the combination of the aspects and preferred features described herein, except where such a combination is clearly impermissible or expressly avoided.

*Summary of the Figures*

Embodiments and experiments illustrating the principles of the invention will now be discussed with reference to the accompanying figures in which:

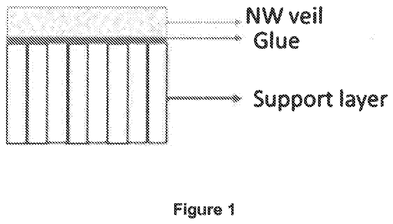

**Figure 1** illustrates one possible application of a non-woven mat described herein as a facer adhered to a support layer, which may for example be an insulation roof board.

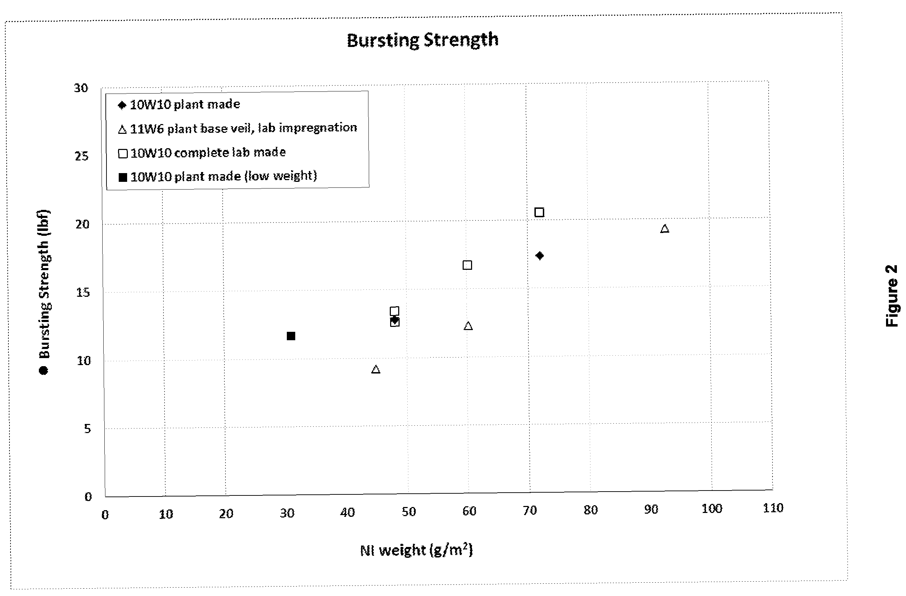

**Figure 2** is a graph showing the effect of NI weight (area weight) on the measured bursting strength for certain exemplary non-woven mats described herein.

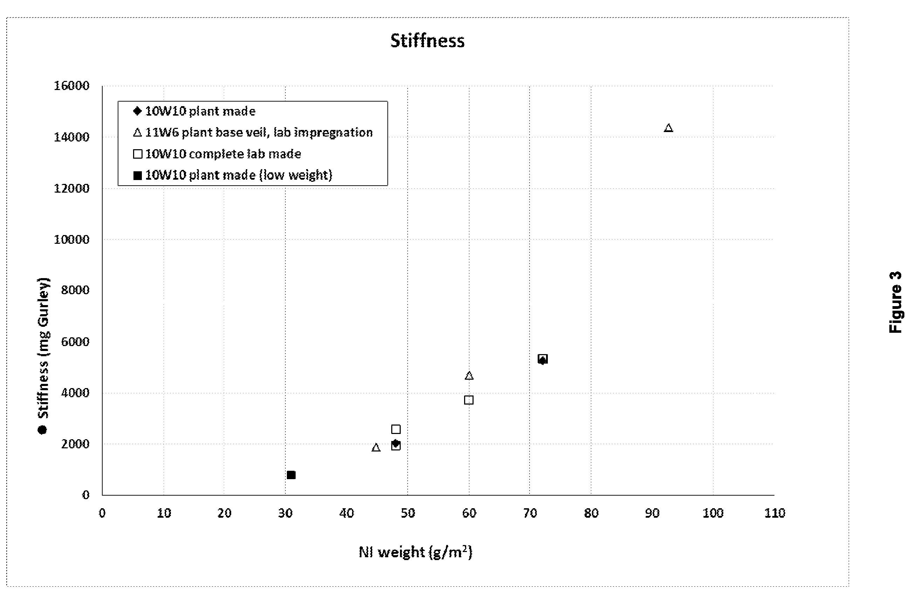

**Figure 3** is a graph showing the stiffness (Gurley) of certain exemplary non-woven mats described herein, plotted against the NI area weight.

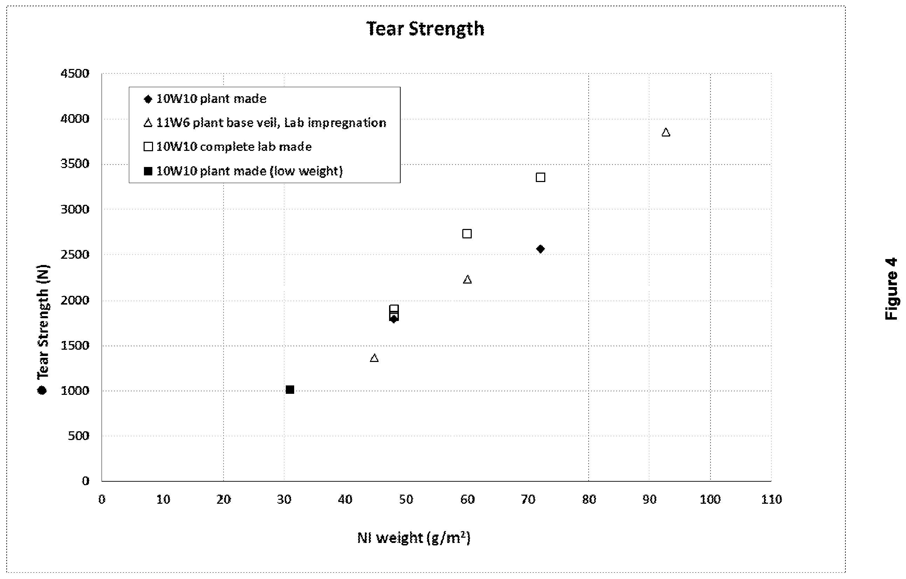

**Figure 4** is a graph showing the showing the tear strength of certain exemplary non-woven mats described herein, plotted against the NI area weight.

*Detailed Description of the Invention*

Aspects and embodiments of the present invention will now be discussed with reference to the accompanying figures. Further aspects and embodiments will be apparent to those skilled in the art.

The present invention provides non-woven mats for use as facers on insulation materials. A facer according to the invention comprises a non-woven veil of glass fibres, impregnated with an impregnation composition. The non-woven veil comprises the fibres and (optionally) a pre-binder. The impregnation composition comprises at least one organic binder and at least one inorganic filler.

Types of glass suitable for producing fibres are known in the art. Examples include E-glass (alumino-borosilicate glass with less than 1% w/w alkali oxides), A-glass (alkali-lime glass with little or no boron oxide), E-CR-glass (electrical/chemical resistance; alumino-lime silicate with less than 1% w/w alkali oxides, with high acid resistance), C-glass (alkali-lime glass with high boron oxide content, used for glass staple fibers and insulation), D-glass (borosilicate glass, named for its low dielectric constant), R-glass (alumino silicate glass without MgO and CaO, with high mechanical requirements), and S-glass (alumino silicate glass without CaO but with high MgO content, with high tensile strength).

Glass fibres having various compositions and properties are known in the art and are commercially available.

In some embodiments, preferred glass fibres for use in the present invention are formed from E-glass or E-CR glass. In some embodiments, preferred glass fibres include Advantex® glass fibres, which are boron-free E-CR glass fibres manufactured by OCV Reinforcements.

In preferred embodiments, the glass fibres are discontinuous (chopped) fibres. In some embodiments, so-called wet use chopped strands (WUCS) are used. These glass fibre filaments are commercially available and are specifically engineered for use in wet-process, non-woven applications. Wet-use chopped strands disperse quickly and uniformly in process water.

The thickness of the fibres may vary from about 5 microns to about 25 microns (average diameter). The diameter of the fibres can be measured, for example, using an electron microscope. The average diameter is determined over a minimum of 100 measurements, preferably 200 measurements, for example at 1000x magnification.

In some embodiments, the thickness of the fibres is from about 6 $\mu$m to about 14 $\mu$m. In some embodiments, the thickness of the fibres is from about 8 $\mu$m to about 12 $\mu$m. In some embodiments, the thickness of the fibres is from about 9 $\mu$m to about 11 $\mu$m. In some embodiments, the thickness of the fibres is greater than about 10 $\mu$m. In some embodiments, the thickness of the fibres is about 10 $\mu$m.

The length of the fibres may vary from about 4 mm to about 40 mm (average length). The length of the fibres can also be determined by electron microscopy, for example using the *Quantimet* image analysis system. A minimum of 100 measurements, preferably 200 measurements, more preferably 400 measurements is used, for example at 1000x magnification.

In some embodiments, the length of the fibres is from about 4mm to about 16mm. In some embodiments, the length of the fibres is from about 6mm to about 14mm. In some embodiments, the length of the fibres is from about 8mm to about 12mm. In some embodiments, the length of the fibres is about 10 mm.

In some embodiments, mixtures of different fibres (i.e. different thicknesses and/or different lengths and/or different types of fibre) may be used. In some embodiments, all the same fibres are used (i.e. same thickness and/or same length and/or same type of fibre).

In particular embodiments, preferred glass fibres for use in the products of the invention are wet-use chopped strands, preferably composed of Advantex® glass, having an average diameter of about 10μm and an average length of about 10mm.

The non-woven veil optionally comprises a pre-binder (also called a primary binder), which may serve to hold the web of fibres together. The pre-binder is preferably an organic polymeric binder. Suitable binders are known in the art and include, for example, thermoplastic and thermoset resins such as polyvinyl alcohol, latexes, acrylics, acrylic acids, epoxy resins, polyurethanes, melamine, urea formaldehyde, phenol formaldehyde, polyester resins, polyvinyl esters; suitable resin binders may also include ethylene-vinyl chloride, polyvinylidenechloride, modified polyvinylchloride, polyvinyl alcohol, ethylene vinyl acetate, polyvinyl acetate, ethylacrylate-methylmethacrylate acrylic copolymer latex, non-carboxylated acrylic with acrylonitriles copolymer latex, carboxylated butyacrylic copolymer latex, urea-formaldehyde latex, melamine-formaldehyde latex, polyvinylchloride-acrylic latex, methylmethacrylate-styrene copolymer latex, styreneacrylic copolymer latex, phenol- formaldehyde latex, vinylacrylic latex, polyacrylic acid latex and other similar resin binders; binders can also be selected from starches, cellulose, saccharides, and combinations thereof. Mixtures of two or more of said binders may also be used.

In some preferred embodiments, the pre-binder is a polyvinyl alcohol based binder.

The amount of pre-binder in such a veil composition may be assessed by the 'loss on ignition' (LOI), which is determined using standard methods as known in the art. For example, loss on ignition may be determined according to ISO 1887.

In some embodiments, loss on ignition may be determined according to ISO 1887 but at a temperature of 800°c instead of 625°C as mentioned in the standard. For example, a sample of at least 100cm$^2$, the weight is determined before and after 2 minutes at 800°C. LOI (%) is calculated by:

$$\frac{(weight\ before)-(weight\ after)}{(weight\ before)} \times 100\%$$

In some embodiments, the pre-binder is preferably present in an amount of from about 10% to about 20% by weight (i.e. 10-20% LOI). In some embodiments, the pre-binder is present in an amount of from about 10% to about 17% by weight. In some embodiments, the pre-binder is present in an amount of from about 12% to about 16% by weight. In some embodiments, the pre-binder is present in an amount of from about 12.5% to about 15% by weight. In some embodiments, the pre-binder is present in an amount of from about 12.5 wt%. In some embodiments, the pre-binder is present in an amount of about 15 wt%.

The non-woven veil used in the present invention has an area weight of at least 45 g/m$^2$. This is the mass per unit area of the veil, not including the impregnation composition (but including a pre-binder, if present). Area weight can be determined according to ISO 536. Area weight is the mass determined for a sample of known length and width.

As mentioned above, the inventors have found that an increased area weight results in improved mechanical properties. The area weight (non-impregnated) of the non-woven veil is at least 45 g/m$^2$. In some embodiments, the area weight is at least 50 g/m$^2$. In some embodiments, the area weight is at least 55 g/m$^2$. In some embodiments, the area weight is at least 60 g/m$^2$. In some embodiments, the area weight is at least 65 g/m$^2$. In some embodiments, the area weight is at least 70 g/m$^2$.

In some embodiments, the area weight (non-impregnated) of the non-woven veil is up to 110 g/m$^2$. In some embodiments, the area weight is up to 100 g/m$^2$. In some embodiments, the area weight is up to 90 g/m$^2$. In some embodiments, the area weight is up to 80 g/m$^2$. In some embodiments, the area weight is up to 75 g/m$^2$.

In some embodiments, the area weight (non-impregnated) of the non-woven veil is from 45 g/m$^2$ to 100 g/m$^2$. In some embodiments, the area weight (non-impregnated) of the non-woven veil is from 45 g/m$^2$ to 90 g/m$^2$. In some embodiments, the area weight (non-impregnated) of the non-woven veil is from 45 g/m$^2$ to 75 g/m$^2$. In some embodiments, the area weight (non-impregnated) of the non-woven veil is from 60 g/m$^2$ to 75 g/m$^2$.

The area weight of the veil can be controlled during production, by controlling concentrations, flow rates and line speed, as is known in the art. Inline control is *via* radiation measurements using different radiation sources to determine the glass and pre-binder amounts. Area weight and LOI are also controlled 'offline' by regular analysis of samples, using the methods described above.

The non-woven veils described herein may be produced by standard methods which are known in the art. For example, wet-laid methods are known whereby fibres are dispersed in an aqueous medium, deposited onto a moving wire screen and drained to form a veil which is then consolidated (e.g. by pressing between rollers) and dried. Impregnation with binders/fillers is often performed in-line at a later stage of this process. Standard methods for producing non-woven veils are described, for example, in industry publications and on industry websites such as: https://www.edana.org/discover-nonwovens/how-they're-made/formation.

Methods for the production of non-woven glass fibre veils are also discussed in various patent references, *for example* in US2010/143684A1, US2006/0292948A1, US2003/008568A1, EP2985374A1, EP1462559A1, US5837620 and US6497787.

The non-woven veil described herein is impregnated with a binder/filler composition to produce the non-woven mats of the invention. The impregnation composition comprises an inorganic filler and an organic binder. It may optionally also comprise small amounts of other additives.

Binders suitable for use in the impregnation composition are known in the art. The binder is preferably an organic polymeric binder. Examples of polymeric binders for use in such a composition include, but are not limited to thermoplastic and thermoset resins such as polyvinyl alcohol, latexes, acrylics, acrylic acids, epoxy resins, polyurethanes, melamine, urea formaldehyde, phenol formaldehyde, polyester resins, polyvinyl esters; suitable resin binders may also include ethylene-vinyl chloride, polyvinylidenechloride, modified polyvinylchloride, polyvinyl alcohol, ethylene vinyl acetate, polyvinyl acetate, ethylacrylate-methylmethacrylate acrylic copolymer latex, non-carboxylated acrylic with acrylonitriles copolymer latex, carboxylated butyacrylic copolymer latex, urea-formaldehyde latex, melamine-formaldehyde latex, polyvinylchloride-acrylic latex, methylmethacrylate-styrene copolymer latex, styreneacrylic copolymer latex, phenol-formaldehyde latex, vinylacrylic latex, polyacrylic acid latex and other similar resin binders; binders can also be selected from starches, cellulose, saccharides, and combinations thereof. Mixtures of two or more of said binders may also be used in the impregnation composition.

In some preferred embodiments, the binder comprises a polyvinyl alcohol.

In some embodiments, the binder comprises an acrylic co-polymer. In some embodiments, the binder comprises a styrene-containing copolymer. In some embodiments, the binder comprises a styrene-acrylic co-polymer. In some embodiments, the binder comprises a copolymer of an acrylate (e.g. butyl acrylate), styrene and acrylonitrile.

In some embodiments, the binder is a mixture of a polyvinyl alcohol and an acrylic co-polymer. In some embodiments, the binder is a mixture of a polyvinyl alcohol and a styrene-containing copolymer. In some embodiments, the binder is a mixture of a polyvinyl alcohol and a styrene-acrylic co-polymer. In some embodiments, the binder is a mixture of a polyvinyl alcohol and a copolymer of an acrylate (e.g. butyl acrylate), styrene and acrylonitrile.

In some embodiments, a polymeric binder having a glass transition temperature below about 15°C is preferred. The glass-transition temperature ($T_g$) of an amorphous material characterizes the range of temperatures over which the transition from a glassy state (hard, brittle) to a rubbery (soft, flexible) state occurs.

The glass transition temperature for a particular material can be determined by known methods, such as differential scanning calorimetry (DSC).

In some embodiments, a polymeric binder having a glass transition temperature below about 10°C is preferred. In some embodiments, a polymeric binder having a glass transition temperature below about 8°C is preferred. In some embodiments, a polymeric binder having a glass transition temperature of about 5°C is preferred. Without wishing to be bound by theory, it is thought that the Tg may be important for fine-tuning the brittleness/flexibility of the final product. The binders used in the facers of the invention beneficially provide a 'high' Modulus, in combination with a long 'tail' before failure, in measurements of bursting strength.

Fillers suitable for use in the impregnation composition are also known in the art. In general terms, a suitable filler is an inorganic, particulate solid. Examples include aluminium trihydrate, calcium carbonate, calcium sulphate, magnesium oxide, magnesium hydroxide, titanium dioxide, zinc oxide, barium sulphate, talc, mica, clay, kaolin, gypsum, fly ash, and mixtures thereof. In some embodiments, the filler may also comprise ceramic microspheres.

The particle size (i.e. average/median particle diameter) of the fillers is preferably in the range of about 0.5 $\mu$m to about 100 $\mu$m. In some embodiments the particle size of the fillers is preferably in the range of about 0.5 $\mu$m to about 50 $\mu$m. In some embodiments the particle size of the fillers is preferably in the range of about 0.5 $\mu$m to about 10 $\mu$m. In some embodiments the particle size of the fillers is preferably in the range of about 0.5 $\mu$m to about 2.5 $\mu$m.

The filler in the impregnation composition used in the present invention comprises a mixture of calcium carbonate ($CaCO_3$) and a second inorganic particulate solid with excellent fire-retardance, The second inorganic particulate solid is selected from solid include aluminium trihydrate (ATH) and magnesium dihydroxide ($Mg(OH)_2$).

The calcium carbonate and the second inorganic particulate solid are present in a ratio of from about 1.7:1 to about 2.5:1 In some embodiments, the ratio is from about 1.7:1 to about 2.3:1. In some embodiments, the ratio is from about 1.9:1 to about 2.1:1. In some embodiments, the ratio is about 2:1.

In some embodiments, the filler in the impregnation composition used in the present invention preferably is, or comprises, a mixture of calcium carbonate ($CaCO_3$) and aluminium trihydrate (ATH). In some embodiments, calcium carbonate and aluminium trihydrate are preferably present in a ratio of from about 1.7:1 to about 2.5:1. In some embodiments, calcium carbonate and aluminium trihydrate are preferably present in a ratio of from about 1.7:1 to about 2.3:1. In some embodiments, calcium carbonate and aluminium trihydrate are preferably present in a ratio of from about 1.9:1 to about 2.1:1 In some embodiments, calcium carbonate and aluminium trihydrate are preferably present in a ratio of about 2:1.

Without wishing to be bound by theory, it is thought that, in some embodiments, this ratio provides good 'peel strength' of the final product (indicative of wind uplift performance). It may also provide good resistance of the facer towards torching (done when applying bitumen membrane to roof).

The content of organic binder in the impregnation composition is preferably between 2 and 25 wt%. In some embodiments, the content of organic binder in the impregnation composition is preferably between 5 and 15 wt%. In some embodiments, the content of organic binder in the impregnation composition is preferably between 5 and 10 wt%.

The content of inorganic filler in the impregnation composition is preferably between 75 and 98 wt% (based on the total dried weight of said composition). In some embodiments, the content of inorganic filler in the impregnation composition is preferably between 80 and 95 wt%. In some embodiments, the content of inorganic filler in the impregnation composition is preferably between 85 and 95 wt%. In some embodiments, the content of inorganic filler in the impregnation composition is preferably between 90 and 95 wt%.

The impregnation composition may optionally comprise additional conventional additives. For example, one or more anti-foaming agents, pH control agents, surfactants, fungicides, pesticides, or herbicides may be added to the composition.

In some embodiments said additives, if present, are in a total amount of up to about 5 wt% of the impregnation composition. In some embodiments said additives are present in a total amount of up to about 3 wt% of the composition. In some embodiments said additives are present in a total amount of up to about 2 wt% of the composition. In some embodiments said additives are present in a total amount of up to about 1 wt% of the composition.

In some embodiments the impregnation composition comprises from 0.1 to 5 wt% of an anti-foaming agent. Various suitable anti-foaming agents are known in the art and include non-silicone defoamers (e.g. mineral oil, alkyl phosphates, block co-polymers of ethylene oxide/propylene oxide) and silicone defoamers (e.g. based on polydimethyl siloxane). In some embodiments a polysiloxane anti-foaming agent, for example a polydimethylsiloxane emulsion, may be used.

In some embodiments the amount of anti-foaming agent from is 0.2 to 3 wt%. In some embodiments the amount of anti-foaming agent from is 0.5 to 2 wt%. In some embodiments the amount of anti-foaming agent from is 0.5 to 1.5 wt%. In some embodiments the amount of anti-foaming agent from is about 1 wt%.

All weight percentages recited above are based on the total dried weight of the impregnation composition, unless otherwise specified.

The impregnation composition is applied to the non-woven veil using known methods. For example, impregnation may be done via a size press technique comprising of two rollers (Foulard). Other coating techniques include: (gravity) curtain coating, kiss-roll, reversed-roll, knife-roll, dip-roll, slit/fountain coating, spray coating. All of the above coating techniques might include a knife/blade/scraper and/or vacuum to control the applied amounts.

The amount of binder/filler applied to the final (impregnated) product may be referred to as the 'add-on' amount. This corresponds to the increase in area weight of the impregnated product (after complete drying/curing, as appropriate) compared to the non-impregnated veil. The area weight of the impregnated product can be measured as described above, using standard methods.

In some embodiments, the add-on amount (i.e. the amount of impregnation composition added to the non-woven veil, per unit area) is from 50 g/m² to 300 g/m². In some embodiments, the add-on amount is from 100 g/m² to 250 g/m². In some embodiments, the add-on amount is from 110 g/m² to 250 g/m². . In some embodiments, the add-on amount is from 120 g/m² to 250 g/m². In some embodiments, the add-on amount is from 150 g/m² to 250 g/m². In some embodiments, the add-on amount is from 100 g/m² to 200 g/m². In some embodiments, the add-on amount is from 110 g/m² to 200 g/m². In some embodiments, the add-on amount is from 120 g/m² to 200 g/m². In some embodiments, the add-on amount is from 150 g/m² to 200 g/m². In some embodiments, the add-on amount is from 170 g/m² to 190 g/m².

The add-on ratio, i.e. the ratio of the add-on amount (in g/m²) to the area weight (in g/m²) of the unfilled veil, can be calculated and provides an indication of the relative proportions of glass fibre veil to binder/filler in the final non-woven product.

In some embodiments, the add-on ratio (add-on/NI) is preferably between 1 and 3. In some embodiments, the add-on ratio is between 2 and 3. In some embodiments, the add-on ratio is between 2.2 and 2.8. In some embodiments, the add-on ratio is between 2.4 and 2.6. In some embodiments, the add-on ratio is between 2 and 2.5.

In some embodiments, the end area weight of the non-woven mat (i.e. the total area weight of the non-woven veil plus impregnation composition, after drying) is preferably in the range of 150 g/m² to 400 g/m². In some embodiments, the end area weight of the non-woven mat is in the range of 150 g/m² to 350 g/m². In some embodiments, the end area weight of the non-woven mat is in the range of 150 g/m² to 300 g/m². In some embodiments, the end area weight of the non-woven mat is in the range of 160 g/m² to 300 g/m². In some embodiments, the end area weight of the non-woven mat is in the range

of 160 g/m$^2$ to 270 g/m$^2$. In some embodiments, the end area weight of the non-woven mat is in the range of 200 g/m$^2$ to 300 g/m$^2$. In some embodiments, the end area weight of the non-woven mat is in the range of 200 g/m$^2$ to 270 g/m$^2$. In some embodiments, the end area weight of the non-woven mat is in the range of 220 g/m$^2$ to 270 g/m$^2$. In some embodiments, the end area weight of the non-woven mat is in the range of 240 g/m$^2$ to 270 g/m$^2$.

The thickness of the non-woven mat can be measured using standard techniques which are known in the art. The thickness of the mats of the invention is generally measured at a pressure of 0.5 kPa. For example, thickness may be determined according to ISO 9073, at 0.5 kPa.

The mats are preferably of a suitable thickness for use as a facer on roofing insulation. For example, it may be desirable to produce mats which do not excessively increase the thickness of the insulation boards, when applied to them as a facer.

In some embodiments, the non-woven mats of the invention have a thickness of from about 0.4 mm to about 0.9 mm at 0.5kPa. In some embodiments, the non-woven mats have a thickness of from about 0.5mm to about 0.9 mm at 0.5 kPa. In some embodiments, the non-woven mats have a thickness of from about 0.5 mm to about 0.8 mm at 0.5 kPa.

The non-woven mats may have a porosity in the range from about 500 to 2500 l/m$^2$ /s (at unit pressure / 100 kPa / 1 atmosphere). In some embodiments, the non-woven mats of the invention preferably have a porosity of from 600 to 2500 l/m$^2$ /s. In some embodiments, the non-woven mats of the invention preferably have a porosity of from 600 to 1800 l/m$^2$ /s. In some embodiments, the non-woven mats of the invention preferably have a porosity of from 700 to 1800 l/m$^2$ /s. In some embodiments, the non-woven mats have a porosity of from 700 to 1400 l/m$^2$ /s.

Porosity (air permeability) can be measured in accordance with known and standard techniques in the art. For example, porosity may be determined according to ISO 9237 at 100 Pa constant pressure drop across the mat.

The non-woven mats (facers) of the present invention have a bursting strength of at least 53.38 N (12 lbf). The present inventors have found that this correlates with an acceptable point load performance of the final product (i.e. an insulation board with the facer applied), and hence predicts/mimics 'walkability' of the facer, when in use.

"Bursting strength" generally indicates the capacity of a material (e.g. a fabric or textile) to withstand pressure without rupture. Bursting strength is determined according to ASTM D3787 (Bursting Strength of Textiles - Constant-Rate-of-Traverse Ball Burst Test).

The non-woven mat of the invention has a bursting strength of at least 53.38 N (12 lbf). In some embodiments, the non-woven mat has a bursting strength of at least 66.72 N (15 lbf). In some embodiments, the non-woven mat has a bursting strength of at least 71.17 N (16 lbf). In some embodiments, the non-woven mat has a bursting strength of at least 75.62 N (17 lbf). In some embodiments, the non-woven mat has a bursting strength of at least 80.07 N (18 lbf). In some embodiments, the non-woven mat has a bursting strength of at least 88.96 N (20 lbf).

Without wishing to be bound by theory, the present inventors have found that tear strength is a better indicator of walkability (point load strength) in the final product than is tensile strength. The tear strength may therefore be optimised (increased), even at the expense of reduced tensile strength, if desired. Optimisation of tear strength may involve many factors including, but not limited to, optimising the choice of finish (sizing) on the glass fibres used.

The non-woven mats (facers) of the present invention preferably have a tear strength (machine direction) of at least 1500 N, as measured according to ISO 1974. In some embodiments, the non-woven mat has a tear strength of at least 1700 N. In some embodiments, the non-woven mat has a tear strength of at least 1900 N. In some embodiments, the non-woven mat has a tear strength of at least 2100 N.

The tensile strength of the non-woven mat of the invention may, for example, be in the region of from 200 to 600 N/50mm, preferably from 200 to 500 N/50mm, as measured according to ISO 1924/2.

Tear strength and tensile strength can be assessed using standard methods known in the art. For example, tensile strength may be measured according to ISO 1924/2 and tear strength may be measured in accordance with ISO 1974 (Elmendorf method).

The non-woven mats (facers) of the invention also preferably have a Gurley stiffness of at least about 1800 mg Gurley, as measured in accordance with standard methods (NEN 1841). Without wishing to be bound by theory, the present inventors have found that increasing the stiffness of the mat (subject to limitations of production and handling constraints, as explained above) has a beneficial effect on walkability of the final product.

In some embodiments, the non-woven mat of the invention has a Gurley stiffness of at least 1800 mg Gurley. In some embodiments, the non-woven mat of the invention has a Gurley stiffness of at least 2000 mg Gurley. In some embodiments, the non-woven mat of the invention has a Gurley stiffness of at least 2500 mg Gurley. In some embodiments, the non-woven mat of the invention has a Gurley stiffness of at least 3000 mg Gurley. In some embodiments, the non-woven mat of the invention has a Gurley stiffness of at least 4000 mg Gurley. In some embodiments, the non-woven mat of the invention has a Gurley stiffness of at least 5000 mg Gurley.

In some embodiments, the non-woven mat of the invention has a Gurley stiffness from about 1800 to about 15000 mg Gurley. In some embodiments, the non-woven mat of the invention has a Gurley stiffness from about 1800 to about 10000 mg Gurley. In some embodiments, the non-woven mat of the invention has a Gurley stiffness from about 1800 to about 7500 mg Gurley. In some embodiments, the non-woven mat of the invention has a Gurley stiffness from about 1800 to about 6000 mg Gurley.

The non-woven mats of the invention are useful as facers, in particular for insulation products. The facers advantageously impart sufficient strength and stiffness that they can withstand being stood or walked upon. Hence, they are particularly suitable for use on products intended for use on flat roofs.

Examples of insulation products include glass wool and mineral wool (e.g. stone wool or rock wool) insulation, which may be available in the form of boards, mats, rolls, slabs or lamella. Other types of insulation include polymeric insulation foams (PUR, PIR, Phenolic, XPS, EPS).

To apply the facer a binder, for example an acrylic binder is used to adhere the nonwoven to the insulation boards. This can be done via spraying, roll coating (including knife blade or doctor blade) or any other technique known to apply a binder.

The binder can be applied on either the nonwoven or the insulation boards. In a non-contact technology there is no preferred surface to apply the glue (either facer or mineral wool board). For application techniques including a contact, the preferred substrate of application is the nonwoven as this will minimize the possibility of contamination of the glue application technique by loose parts of mineral wool (i.e. the nonwoven will not pollute the contact rollers and reflux of glue).

Without wishing to be bound by theory, the non-woven veils of the present invention may advantageously exhibit 'composite'-like behaviour when glued to an insulation layer (such as mineral wool insulation, in particular lamellar mineral wool insulation). The composite-like behaviour encompasses mineral wool density, glue performance and glue penetration.

The non-woven mats of the invention can be used as facers to improve walkability and reduce compressibility of an insulation board or other material. This is especially useful when the material in question is easily compressible and deformable. Advantageously, the facers of the invention are non-combustible and so also contribute to the fire resistance properties of the materials to which they applied.

Throughout this specification, including the claims which follow, unless the context requires otherwise, the word "comprise" and "include", and variations such as "comprises", "comprising", and "including" will be understood to imply the inclusion of a stated integer or step or group of integers or steps but not the exclusion of any other integer or step or group of integers or steps.

It must be noted that, as used in the specification and the appended claims, the singular forms "a," "an," and "the" include plural referents unless the context clearly dictates otherwise. Ranges may be expressed herein as from "about" one particular value, and/or to "about" another particular value. When such a range is expressed, another embodiment includes from the one particular value and/or to the other particular value. Similarly, when values are expressed as approximations, by the use of the antecedent "about," it will be understood that the particular value forms another embodiment.

***Examples***

A series of non-woven mats were constructed and tested for their suitability as facers for roofing insulation. These products were made by application of an impregnation (binder/filler) composition to a bound web of non-woven glass fibres.

*EXAMPLE 1 - general method (laboratory)*

A stock solution is prepared by adding 68 gram of glass fibres and 22 gram of primary binder in 20 liters of process water and stirring (900 rpm) the suspension during 30 minutes. After this time, the stock preparation is diluted to 200 liters using process water and stirred during 5 minutes.

10 liters of the 200 liters are further diluted by 10 liters of tap water. Gentle stirring is applied to ensure a homogeneous dispersion. This dispersion if filtered over a form wire. The obtained wet nonwoven is transferred to an air circulated oven and dried for 6 min. at 180°C. A4-sized sheets of approx. 50 gram/$m^2$ are then conditioned at room temperature before further testing.

*EXAMPLE 2 - general method (plant)*

A veil is formed from dispersed glass fibres in a wet laid process using an inclined wire former. The veil is fed to a belt dryer and dried and cured to form a pre-bonded sheet. The sheet is subsequently in-line impregnated using a size press Foulard applicator using an impregnation composition as described herein (applied as an aqueous dispersion). Add-on is controlled using a Foulard pressure and a vacuum system. The impregnated sheet is fed to a dryer and the product is obtained.

*EXAMPLE 3 - compositions*

In this example, a veil composed of 85wt% glass fibres and 15wt% polyvinyl alcohol pre-binder was prepared as described in Example 1. The glass fibres used in this example are so called wet used chopped strands made from Advantex® E glass. The glass fibres used in this example are 10μm/10 mm fibres. The impregnation composition used for the inventive mat consists of a filler which is a mixture of approximately 2/3 calcium carbonate and 1/3 aluminium trihydrate (both with 1.5 μm median particle size), an organic binder which is a mixture of polyvinyl alcohol and an acrylic co-polymer, and an anti-foaming agent (polydimethylsiloxane).

*Example (non-woven mats of the invention):*

| Base veil: | | |
|---|---|---|
| Glass fibres | Advantex® WUCS | 85 wt% |
| Primary binder | Polyvinyl alcohol | 15 wt% |
| | | |
| *Impregnation:* | | |
| Secondary binders: | Polyvinyl alcohol | 1.1 wt% |
| | Acrylic (copolymer of butyl acrylate, styrene and acrylonitrile) | 6.3 wt% |
| Fillers: | calcium carbonate | 61.3 wt% |
| | aluminum hydroxide (ATH) | 30.3 wt% |
| Additives: | Anti-foam (polydimethylsiloxane emulsion) | 1.0 wt% |

*Comparative example:*

| Base veil: | | |
|---|---|---|
| Glass fibres | Advantex® WUCS | 85 wt% |
| Primary binder | Polyvinyl alcohol | 15 wt% |
| | | |
| *Impregnation:* | | |
| Secondary binders: | Polyvinyl alcohol | 1.0 wt% |
| | Acrylic (styrene-acrylic copolymer) | 6.1 wt% |
| Fillers: | calcium carbonate | 30.9 wt% |
| | aluminum hydroxide (ATH) | 56.9 wt% |
| Additives: | pH control (citric acid monohydrate) | 4.1 wt% |
| | Anti-foam (polydimethylsiloxane emulsion) | 1.1 wt% |

*EXAMPLE 4 - non-woven mats*

As described above in Examples 1 and 2, a number of non-woven veils were prepared from wet-use chopped strand (WUCS) glass fibres. These were impregnated with a binder/filler composition, as set out in Example 3.
Physical properties including area weight, add-on, and thickness of the non-woven products are controlled during processing, as described above.
The properties of the exemplary non-woven mats obtained are detailed in the tables below. In particular, the bursting strength of the non-woven mat (facer) was measured, as a predictor of the 'walkability' of the final product (i.e. of the facer when applied to roofing insulation). Higher bursting strength correlates with better performance in the final product.

The values in the tables were determined using accepted industry standards of measurement, as described above.

**Table 1A**

| Sample ID | Method | WUCS | Pre- binder wt% (LOI) | Area weight of NI (g/m²) | End (g/m²) | Add on (g/m²) |
|---|---|---|---|---|---|---|
| 1*1 | plant | WS 2301 11W6 | 15 | 44.9 | 157.6 | 112.8 |
| 2 | plant | WS 2301 11W6 | 14.5 | 60.1 | 214.8 | 154.8 |
| 3 | plant | WS 2301 11W6 | 12.5 | 92.7 | 324.5 | 231.9 |
| 4 | lab made | 9565 10W10 | 12.50 | 48 | 161.6 | 113.6 |
| 5 | lab made | 9565 10W10 | 12.50 | 48 | 178.9 | 130.9 |
| 6 | lab made | 9565 10W10 | 12.50 | 60 | 221.1 | 161.1 |
| 7 | lab made | 9565 10W10 | 12.50 | 72 | 246.7 | 174.7 |
| 8*2 | production | WS 2301 10W10 | 15 | 31 | 123.05 | 92.05 |
| 9 | production | WS 9565 10W10 | 15 | 48 | 164.33 | 116.33 |
| 10 | production | WS 9565 10W10 | 15 | 72 | 255 | 183 |

**Table 1B**

| Sample ID | Ratio Add on : NI | Thickness 0,5kPa (mm) | Porosity (l/m²/s) | Tear MD Elmendorf (N) | Tensile MD (N/50mm) | Gurley stiffness (mg Gurley) | Bursting Strength Load Mean (lbf) |
|---|---|---|---|---|---|---|---|
| 1*1 | 2.51 | 0.533 | 1205 | 1369 | 246 | 1875 | 9.2 |
| 2 | 2.58 | 0.733 | 977 | 2228 | 301 | 4688 | 12.3 |
| 3 | 2.50 | - | 631 | 3856 | 508 | 14388 | 19.3 |
| 4 | 2.37 | 0.511 | 1060 | 1832 | 285 | 1950 | 12.6 |
| 5 | 2.73 | 0.551 | 931 | 1907 | 356 | 2593 | 13.5 |
| 6 | 2.69 | 0.610 | 703 | 2738 | 439 | 3736 | 16.8 |
| 7 | 2.43 | 0.696 | 718 | 3359 | 430 | 5366 | 20.6 |
| 8*2 | 2.97 | 0.42 | 1303 | 1013 | 217 | 783 | 11.7 |
| 9 | 2.42 | 0.57 | 1284 | 1793 | 271 | 2038 | 12.8 |
| 10 | 2.54 | 0.793 | 718 | 2564 | 482 | 5265 | 17.4 |

*1 Sample 1 = reference example
*2 Sample 8 = comparative example
NI = non-impregnated veil
WUCS = wet-use chopped strands (Advantex® glass); 11W6 = 11 μm diameter, 6mm length; 10W10 = 10 μm diameter, 10mm length
MD = machine direction

**Claims**

1. A non-woven mat, suitable for use as a walkable facer for roofing insulation, comprising a non-woven veil of glass fibres impregnated with an impregnation composition;

wherein the impregnation composition comprises an organic binder and an inorganic filler,

the filler comprising calcium carbonate and a second inorganic particulate solid selected from aluminium trihydrate and magnesium dihydroxide;

wherein a ratio of the calcium carbonate to the second inorganic particulate solid is from about 1.7:1 to about 2.5:1;

wherein the area weight of the non-woven veil before impregnation is at least 45 g/m$^2$;

and wherein the mat has a bursting strength of at least about 53.38 N (12 lbf) according to ASTM D3787.

2. A non-woven mat according to claim 1, wherein the mat has at least one of:

(i) a tear strength (MD, Elmendorf) of at least about 1500 N;
(ii) a stiffness of at least about 1800 mg Gurley.

3. A non-woven mat according to any one of the preceding claims, wherein the calcium carbonate and the second inorganic particulate solid are present in a ratio of from about 1.7:1 to about 2.3:1, more preferably from about 1.9:1 to 2.1:1.

4. A non-woven mat according to any one of the preceding claims, wherein the particle size of the calcium carbonate and the second inorganic particulate solid is in the range of about 0.5 $\mu$m to about 50 $\mu$m, preferably in the range of about 0.5 $\mu$m to about 10 $\mu$m, more preferably in the range of about 0.5 $\mu$m to about 2.5 $\mu$m.

5. A non-woven mat according to any one of the preceding claims, wherein the glass fibres are discontinuous fibres, preferably formed from E glass or E-CR glass and/or wherein the glass fibres have an average diameter from about 8 $\mu$m to about 12 $\mu$m and/or wherein the glass fibres have an average length from about 8mm to about 12mm.

6. A non-woven mat according to any one of the preceding claims, wherein the non-woven veil of glass fibres comprises a pre-binder, preferably a polyvinyl alcohol pre-binder.

7. A non-woven mat according to any one of the preceding claims, wherein the area weight of the non-woven veil before impregnation is at least 50 g/m$^2$, preferably at least 60 g/m$^2$, more preferably at least 70 g/m$^2$.

8. A non-woven mat according to any one of the preceding claims, wherein the area weight of the non-woven veil before impregnation is up to 90 g/m$^2$, preferably up to 80 g/m$^2$, more preferably up to 75 g/m$^2$.

9. A non-woven mat according to any one of the preceding claims, wherein the area weight of the non-woven veil before impregnation is from 60 g/m$^2$ to 75 g/m$^2$.

10. A non-woven mat according to any one of the preceding claims, wherein the add-on amount is from 100 g/m$^2$ to 250 g/m$^2$, preferably from 150 g/m$^2$ to 250 g/m$^2$.

11. A non-woven mat according to any one of the preceding claims, wherein the area weight of the non-woven mat after impregnation is from 150 g/m$^2$ to 400 g/m$^2$, preferably 160 g/m$^2$ to 270 g/m$^2$, more preferably 220 g/m$^2$ to 270 g/m$^2$.

12. A non-woven mat according to any one of the preceding claims, wherein the ratio of the add-on amount to the area weight of the non-woven mat before impregnation is between 2 and 3, preferably between 2.2 and 2.8, more preferably between 2.4 and 2.6.

13. A non-woven mat according to any one of the preceding claims, wherein the organic binder in the impregnation composition comprises at least one of a polyvinyl alcohol and/or a copolymer of an acrylate, such as butyl acrylate, styrene and acrylonitrile.

14. A non-woven mat according to any one of the preceding claims, wherein the organic binder in the impregnation composition has a glass transition temperature below about 15°C, preferably below about 10°C.

15. A non-woven mat according to any one of the preceding claims, wherein the non-woven mat after impregnation has a porosity of from 600 to 2500 l/m$^2$ /s, preferably from 700 to 1800 l/m$^2$ /s, more preferably from 700 to 1400 l/m$^2$ /s.

**Patentansprüche**

1. Vliesmatte, geeignet zur Verwendung als begehbarer Belag für die Dachdämmung, umfassend einen Vliesschleier aus Glasfasern, der mit einer Imprägnierungszusammensetzung imprägniert ist;

   wobei die Imprägnierungszusammensetzung ein organisches Bindemittel und einen anorganischen Füllstoff umfasst, wobei der Füllstoff Calciumcarbonat und einen zweiten anorganischen teilchenförmigen Feststoff umfasst, der aus Aluminiumtrihydrat und Magnesiumdihydroxid ausgewählt ist;
   wobei ein Verhältnis des Calciumcarbonats zu dem zweiten anorganischen teilchenförmigen Feststoff von etwa 1,7 : 1 bis etwa 2,5 : 1 beträgt;
   wobei das Flächengewicht des Vliesschleiers vor der Imprägnierung mindestens 45 g/m$^2$ beträgt;
   und wobei die Matte eine Berstfestigkeit von mindestens etwa 53,38 N (12 lbf) gemäß ASTM D3787 aufweist.

2. Vliesmatte nach Anspruch 1, wobei die Matte mindestens eine aufweist von:

   (i) einer Weiterreißfestigkeit (MD, Elmendorf) von mindestens etwa 1500 N;
   (ii) eine Steifigkeit von mindestens etwa 1800 mg Gurley.

3. Vliesmatte nach einem der vorhergehenden Ansprüche, wobei das Calciumcarbonat und der zweite anorganische teilchenförmige Feststoff in einem Verhältnis von etwa 1,7 : 1 bis etwa 2,3 : 1, mehr bevorzugt von etwa 1,9 : 1 bis 2,1 : 1, vorliegen.

4. Vliesmatte nach einem der vorhergehenden Ansprüche, wobei die Partikelgröße des Calciumcarbonats und des zweiten anorganischen teilchenförmigen Feststoffs in dem Bereich von etwa 0,5 $\mu$m bis etwa 50 $\mu$m liegt, vorzugsweise in dem Bereich von etwa 0,5 $\mu$m bis etwa 10 $\mu$m, mehr bevorzugt in dem Bereich von etwa 0,5 $\mu$m bis etwa 2,5 $\mu$m.

5. Vliesmatte nach einem der vorhergehenden Ansprüche, wobei die Glasfasern unterbrochene Fasern sind, vorzugsweise gebildet aus E-Glas oder E-CR-Glas, und/oder wobei die Glasfasern einen durchschnittlichen Durchmesser von etwa 8 $\mu$m bis etwa 12 $\mu$m aufweisen und/oder wobei die Glasfasern eine durchschnittliche Länge von etwa 8 mm bis etwa 12 mm aufweisen.

6. Vliesmatte nach einem der vorhergehenden Ansprüche, wobei der Vliesschleier aus Glasfasern einen Vorbinder umfasst, vorzugsweise einen Polyvinylalkohol-Vorbinder.

7. Vliesmatte nach einem der vorhergehenden Ansprüche, wobei das Flächengewicht des Vliesschleiers vor der Imprägnierung mindestens 50 g/m$^2$ beträgt, vorzugsweise mindestens 60 g/m$^2$, mehr bevorzugt mindestens 70 g/m$^2$.

8. Vliesmatte nach einem der vorhergehenden Ansprüche, wobei das Flächengewicht des Vliesschleiers vor der Imprägnierung bis zu 90 g/m$^2$ beträgt, vorzugsweise bis zu 80 g/m$^2$, mehr bevorzugt bis zu 75 g/m$^2$.

9. Vliesmatte nach einem der vorhergehenden Ansprüche, wobei das Flächengewicht des Vliesschleiers vor der Imprägnierung von 60 g/m$^2$ bis 75 g/m$^2$ beträgt.

10. Vliesmatte nach einem der vorhergehenden Ansprüche, wobei die Auftragemenge von 100 g/m$^2$ bis 250 g/m$^2$ beträgt, vorzugsweise von 150 g/m$^2$ bis 250 g/m$^2$.

11. Vliesmatte nach einem der vorhergehenden Ansprüche, wobei das Flächengewicht der Vliesmatte nach der Imprägnierung von 150 g/m$^2$ bis 400 g/m$^2$ beträgt, vorzugsweise 160 g/m$^2$ bis 270 g/m$^2$, mehr bevorzugt 220 g/m$^2$ bis 270 g/m$^2$.

12. Vliesmatte nach einem der vorhergehenden Ansprüche, wobei das Verhältnis der Auftragemenge zu dem Flächengewicht der Vliesmatte vor der Imprägnierung zwischen 2 und 3 liegt, vorzugsweise zwischen 2,2 und 2,8, mehr bevorzugt zwischen 2,4 und 2,6.

13. Vliesmatte nach einem der vorhergehenden Ansprüche, wobei das organische Bindemittel in der Imprägnierungszusammensetzung mindestens eines von einem Polyvinylalkohol und/oder einem Copolymer eines Acrylats, wie Butylacrylat, Styrol und Acrylnitril umfasst.

**14.** Vliesmatte nach einem der vorhergehenden Ansprüche, wobei das organische Bindemittel in der Imprägnierungszusammensetzung eine Glasübergangstemperatur unter etwa 15 °C, vorzugsweise unter etwa 10 °C aufweist.

**15.** Vliesmatte nach einem der vorhergehenden Ansprüche, wobei die Vliesmatte nach der Imprägnierung eine Porosität von 600 bis 2500 l/m²/s aufweist, vorzugsweise von 700 bis 1800 l/m²/s, mehr bevorzugt von 700 bis 1400 l/m²/s.

**Revendications**

1. Tapis non tissé, approprié pour être utilisé comme parement sur lequel il est possible de marcher pour l'isolation de toiture, comprenant un voile non tissé de fibres de verre imprégné d'une composition d'imprégnation ;

   dans lequel la composition d'imprégnation comprend un liant organique et une charge inorganique, la charge comprenant du carbonate de calcium et un second solide particulaire inorganique choisi parmi trihydrate d'aluminium et dihydroxyde de magnésium ;
   dans lequel un rapport entre le carbonate de calcium et le second solide particulaire inorganique est compris entre environ 1,7:1 et environ 2,5:1 ;
   dans lequel le poids surfacique du voile non tissé avant imprégnation est d'au moins 45 g/m² ;
   et dans lequel le tapis a une résistance à l'éclatement d'au moins environ 53,38 N (12 Ibf) selon la norme ASTM D3787.

2. Tapis non tissé selon la revendication 1, dans lequel le tapis a au moins l'une parmi :

   (i) une résistance au déchirement (MD, Elmendorf) d'au moins environ 1 500 N ;
   (ii) une rigidité d'au moins environ 1 800 mg Gurley.

3. Tapis non tissé selon l'une quelconque des revendications précédentes, dans lequel le carbonate de calcium et le second solide particulaire inorganique sont présents dans un rapport compris entre environ 1,7:1 et environ 2,3:1, plus préférablement entre environ 1,9:1 et 2,1:1.

4. Tapis non tissé selon l'une quelconque des revendications précédentes, dans lequel la taille de particules du carbonate de calcium et du second solide particulaire inorganique est comprise dans la plage d'environ 0,5 $\mu$m à environ 50 $\mu$m, de préférence dans la plage d'environ 0,5 $\mu$m à environ 10 $\mu$m, plus préférablement dans la plage d'environ 0,5 $\mu$m à environ 2,5 $\mu$m.

5. Tapis non tissé selon l'une quelconque des revendications précédentes, dans lequel les fibres de verre sont des fibres discontinues, de préférence formées à partir de verre E ou de verre E-CR et/ou dans lequel les fibres de verre ont un diamètre moyen d'environ 8 $\mu$m à environ 12 $\mu$m et/ou dans lequel les fibres de verre ont une longueur moyenne d'environ 8 mm à environ 12 mm.

6. Tapis non tissé selon l'une quelconque des revendications précédentes, dans lequel le voile non tissé de fibres de verre comprend un préliant, de préférence un préliant d'alcool polyvinylique.

7. Tapis non tissé selon l'une quelconque des revendications précédentes, dans lequel le poids surfacique du voile non tissé avant imprégnation est d'au moins 50 g/m², de préférence d'au moins 60 g/m², plus préférablement d'au moins 70 g/m².

8. Tapis non tissé selon l'une quelconque des revendications précédentes, dans lequel le poids surfacique du voile non tissé avant imprégnation va jusqu'à 90 g/m², de préférence jusqu'à 80 g/m², plus préférablement jusqu'à 75 g/m².

9. Tapis non tissé selon l'une quelconque des revendications précédentes, dans lequel le poids surfacique du voile non tissé avant imprégnation va de 60 g/m² à 75 g/m².

10. Tapis non tissé selon l'une quelconque des revendications précédentes, dans lequel la quantité supplémentaire va de 100 g/m² à 250 g/m², de préférence de 150 g/m² à 250 g/m².

11. Tapis non tissé selon l'une quelconque des revendications précédentes, dans lequel le poids surfacique du tapis non tissé après imprégnation va de 150 g/m² à 400 g/m², de préférence 160 g/m² à 270 g/m², plus préférablement 220

g/m$^2$ à 270 g/m$^2$.

**12.** Tapis non tissé selon l'une quelconque des revendications précédentes, dans lequel le rapport entre la quantité supplémentaire et le poids surfacique du tapis non tissé avant imprégnation est compris entre 2 et 3, de préférence entre 2,2 et 2,8, plus préférablement entre 2,4 et 2,6.

**13.** Tapis non tissé selon l'une quelconque des revendications précédentes, dans lequel le liant organique dans la composition d'imprégnation comprend au moins l'un parmi un alcool polyvinylique et/ou un copolymère d'un acrylate, tel que butyle acrylate, styrène et acrylonitrile.

**14.** Tapis non tissé selon l'une quelconque des revendications précédentes, dans lequel le liant organique dans la composition d'imprégnation a une température de transition vitreuse inférieure à environ 15 °C, de préférence inférieure à environ 10 °C.

**15.** Tapis non tissé selon l'une quelconque des revendications précédentes, dans lequel le tapis non tissé après imprégnation a une porosité allant de 600 à 2 500 l/m$^2$ /s, de préférence de 700 à 1 800 l/m$^2$ /s, plus préférablement de 700 à 1 400 l/m$^2$ /s.

Figure 1

Figure 2

Figure 3

Figure 4

**EP 3 983 591 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20030032351 A1
- US 2010143684 A1
- US 20060292948 A1
- US 2003008568 A1
- EP 2985374 A1
- EP 1462559 A1
- US 5837620 A
- US 6497787 B